# EUROPÄISCHE PATENTSCHRIFT

(11) **EP 0 666 383 B1**
(45) Veröffentlichungstag und Bekanntmachung des Hinweises auf die Patenterteilung: **29.07.1998**
(21) Anmeldenummer: 95890024.3
(22) Anmeldetag: 03.02.1995
(51) Int. Cl.: E04B 5/48

(54) **Klimaplatte**
Climatic plate
Plaque climatique

(30) Priorität: 07.02.1994 AT 227/94
(43) Veröffentlichungstag der Anmeldung: 09.08.1995
(73) Patentinhaber: Steiner, Martin, A-3379 Ybbs/Österreich (AT)
(72) Erfinder: Steiner, Martin, A-3379 Ybbs/Österreich (AT)
(74) Vertreter: Kliment, Peter, Dipl.-Ing.

(56) Entgegenhaltungen:
- AT-B- 381 160
- DE-A- 4 106 200
- GB-A- 2 035 435

## Beschreibung

Die Erfindung bezieht sich auf eine Klimaplatte gemäß dem Oberbegriff des Anspruches 1.

Bekannte Klimawände weisen im wesentlichen vertikal verlaufende Schächte auf, in denen meist erwärmte Luft geführt wird, die allerdings über entsprechende Auslässe in den zu erwärmenden Raum ausströmt und sich daher mit der Raumluft vermischt. Einen allerdings meist nur geringen Anteil ihrer Wärme gibt die die Wandkanäle durchströmende Luft auch durch die Strahlung der die Wandkanäle gegen den zu erwärmenden Raum zu abschließenden Wand ab.

Der Nachteil dieser Klimawände liegt in deren relativ großen Dicke und dem relativ geringen Beitrag zur Erwärmung des Raumes den sie durch die Strahlung der Wand leisten können.

Aufgrund der langjährigen Forschungsarbeiten von Ärzten (z.B. Dr.med. Ledwina, Dr. Luger) wurde die Erkenntnis gewonnen, daß für die Gesundheit, das Wohlbefinden und die Leistungsfähigkeit eines Menschen eine großflächige Wandstrahlungsheizung, und eine konvektive Entwärmung des Körpers und ein zumindest einfacher Luftwechsel von entscheidender Bedeutung ist. Eine Erwärmung des Menschen durch Aufnahme der von einer beheizten Wand abgestrahlten Wärme wird als besonders behaglich empfunden.

Die konvektive Entwärmung des Körpers ist nur dann möglich, wenn die Raumumschließungsflächen, insbesondere auch die Außenwände eine Oberflächentemperatur von mindestens 22°C gegenüber einer um ca. 5°C abgesenkten Raumlufttemperatur im Winter aufweisen.

Die richtige Entwärmung ist aber auch in der wärmeren Jahreszeit für die Behaglichkeit und Gesundheit die wichtigste Voraussetzung. bekanntlich sollte die Raumlufttemperatur das Mittel zwischen 20°C und der jeweiligen Außentemperatur aufweisen. Beispielsweise Außentemperatur 30°C, daher Raumlufttemperatur 25°C.

Bei einer länger anhaltenden Hitzeperiode, bzw. generell im Sommer in den südlichen Ländern, kommt es zu einem Temperaturausgleich zwischen der Außentemperatur und den Raumumschließungsflächen. Dieses Problem tritt besonders bei einer Leichtbauweise zu Tage, wo keine große Speichermasse im Haus vorhanden ist.

Die zu hohen Oberflächentemperaturen der Umschließungsflächen ermöglichen im Sommer dem menschlichen Körper eine zu geringe Entwärmung, wodurch es bekanntlich zu großen Kreislaufbelastungen, Schweißausbruch, Unbehagen und damit verbunden zu einer Leistungsverminderung kommt.

Um diesem bekannten Problem im Sommer Abhilfe zu verschaffen, werden Klimaanlagen in Wohn- und Bürogebäuden eingebaut, durch die die zirkulierende Raumluft gekühlt wird. Abgesehen von den großen Investitions- und Betriebskosten bewirken diese Systeme eine Verschlechterung der Atemluftqualität durch die Ionisationsverluste der Luft, verursachen durch den hohen Konvektionsanteil eine zu hohe Luftbewegung, wodurch insbesondere der Feinstaub mittransportiert und eingeatmet wird. Ein weiterer Nachteil der Klimaanlage ist eine künstlich aufbereitete Luft, die sich von der Außenluft unterscheidet, wodurch negative Auswirkungen auf die Gesundheit entstehen können.

Eine Klimawand, bei der die vom Heiz- oder Kühlmedium durchströmbaren Leitungen oder Rohre überdeckt sind, wurde z.B. durch die FR-A-2 390 684 bekannt. Bei dieser bekannten Lösung sind die Leitungen auf der mit Vorsprüngen versehenen Montageplatte angeordnet und mit Blech mit Abständen von den Leitungen abgedeckt.

Dabei ergibt sich jedoch der Nachteil eines relativ schlechten Wärmeüberganges von den Leitungen zum Raum, da zwischen der Montageplatte und der Blechabdeckung ein entsprechender Luftraum verbleibt. Außerdem ergibt sich bei dieser bekannten Wand auch ein relativ hoher Wärmeabfluß über die Montageplatte und der an diese anschließende Wand.

Weiters wurde durch die AT-A-392 107 eine Klimaplatte der eingangs erwähnten Art vorgeschlagen, bei der der Zwischenraum zwischen den vom Heiz- oder Kühlmedium durchströmten Leitungen oder Rohren mit einem Mörtel, Putz, insbesondere Kalkputz ausgefüllt ist und die Abdeckplatte, meist eine Gips- oder Gipskartonplatte mit dieser Mörtel- oder Putzschicht verbunden ist. Dabei erfolgt die Verbindung der Abdeckung entweder dadurch daß diese auf die noch feuchte Mörtel- oder Putzschicht gedrückt wird, oder aber eine feuchte Klebemörtelschicht auf die bereits abgetrocknete Mörtel- oder Putzschicht aufgebracht und die Abdeckplatte auf die noch feuchte Klebemörtelschicht aufgedrückt wird.

In beiden Fällen ist eine Durchfeuchtung der Abdeckplatte nicht zu vermeiden, wodurch diese an Festigkeit verliert. Außerdem bereiten die Wärmedehnungen der Rohre in der Mörtel- oder Putzschicht Probleme, wobei es zur Ausbildung von Rissen und Sprüngen kommen kann. Außerdem erfordert die Trocknung eine entsprechende Energiezufuhr. Ein weiterer Nachteil dieser Lösung ist durch das relativ hohe Gewicht der Platten gegeben.

Weiters wurde durch die DE-A-41 06 200 eine Klimawand der eingangs erwähnten Art bekannt, bei der die Füllschicht aus einem wärmeleitfähigen Merial mit Klebeigenschaften gebildet ist, wobei das Einbetten der Kapillarrohre in eine klebrige Masse erfolgt. Dabei ist vorgesehen, die durch eine klebrige viskose Masse gebildete Füllschichte mit einem zahn- oder kammähnlichem Aufstreichwerkzeug aufzutragen und dabei gleichzeitig die Kapillarrohre in einem vorbestimmten gegenseitigen Abstand parallel zueinander auszurichten und mit dem aufgetragenen Füllschichtmaterial gleichzeitig zu fixieren.

Der Nachteil der bekannten Lösung liegt darin, daß eine klebrige viskose Masse nur umständlich aufgetragen werden kann. Dadurch ergibt sich aber nur eine eher geringe Produktionsgeschwindigkeit. Abgesehen davon ist auch die notwendige Reinigung der Aufstreichwerkzeuge mit einem erheblichen Aufwand verbunden. Da die meisten klebrigen Massen Lösungsmittel, meist auf der Basis von Kohlenwasserstoffen, enthalten ergibt sich auch eine nicht zu unterschätzende Belastung für die Umwelt und erhebliche gesundheitliche Risken für mit der Herstellung solcher Klimaplattten beschäftigte Arbeiter.

Ziel der Erfindung ist es, eine Klimaplatte der eingangs erwähnten Art vorzuschlagen, bei der ein guter Wärmeübergang von den Leitungen oder Rohren zur Abdeckung gegen den zu klimatisierenden Raum sichergestellt ist, und die sich leicht herstellen und montieren läßt und bei der die Ausbildung von Rissen weitgehend vermieden ist.

Erfindungsgemäß wird dies bei einer Klimaplatte der eingangs erwähnten Art durch die kennzeichnenden Merkmale des Anspruches 1 erreicht.

Durch die erfindungsgemäß vorgeschlagenen Maßnahmen ist eine einfache Herstellung von Klimaplattten möglich, da die Füllschicht nach dem Aufbringen der Leitungen oder Rohre auf die Trägerplatte einfach auf diese aufgeschüttet und glatt gestrichen werden kann, wonach die Decklatte, zumindest im Bereich der Stege der Trägerplatte, verklebt wird. Dies kann auch mit beidseitig klebenden Montagebänder erfolgen.

Selbst wenn die Partikel vor dem Auftragen auf die Trägerplatte mit einem Kleber oder Bindemittel benetzt werden, so läßt sich eine solche Masse bei weitem besser und rascher auf der Trägerplatte auftragen und glattstreichen als eine zähe viskose klebrige Masse. Bedingt ist dies durch die im wesentlichen aus Partikel bestehende Struktur einer solchen Füllmasse.

Weiters ergibt sich auch der Vorteil, daß diese Schicht aus gut wärmeleitenden Partikeln Wärmedehnung sehr gut aufnehmen kann und daher eine Rißbildung praktisch ausgeschlossen ist. Dabei ergibt sich auch eine Möglichkeit einer Weiterverwertung von Spänen aus hochlegiertem Aluminium, die nur sehr schlecht recyclierbar sind.

Da die abdeckende Schicht mit im wesentlichen wasserfreien Klebern befestigt werden kann, ergibt sich auch keine Festigkeitsverminderung der Abdeckplatte, auch wenn diese durch eine Gipskartonplatte gebildet ist.

Durch die Merkmale des Anspruches 2 ergibt sich der Vorteil, daß die Leitungen oder Rohre einfach in die vorgesehenen Aufnahmen eingedrückt werden können und dabei gleichzeitig ausreichende Auflageflächen für die Abdeckplatte definiert sind.

Außerdem ist auch sichergestellt, daß die Partikel der den Raum zwischen den Rohren füllenden Schicht aus Partikeln aus gut wärmeleitendem Material auch dann nicht aus der erfindungsgemäßen Klimaplatte rieseln können, wenn diese im wesentlichen in vertikaler Stellung gelagert oder transportiert werden. Statt der Gipskartonplatten können auch Platten aus anderen Materialien wie z.B. Melaninharzplatten, oder ein Glasseidengewebe oder eine Blechabdeckung vorgesehen sein.

Ein weiteres Ziel der Erfindung ist es, ein Verfahren zur Herstellung von erfindungsgemäßen Klimaplatten anzugeben, mit dem die Klimaplatten auf einfache Weise hergestellt werden können.

Durch die Merkmale des Anspruches 3 ergibt sich eine sehr einfache Fertigung der Klimaplatten, wobei durch ein allfälliges Benetzen der Partikel die Haftung der Partikel an der Trägerplatte und den Rohren und aneinander entsprechend verbessert wird, wodurch auch die Handhabbarkeit der Masse verbessert wird. Grundsätzlich ist es aber auch möglich, auf eine Benetzung der Partikel zu verzichten und diese lose auf der Tragplatte aufzubringen und mechanisch zu verdichten.

Die Erfindung wird nun anhand der Zeichnung näher erläutert. Dabei zeigen:
Fig. 1 eine erfindungsgemäße Klimaplatte in Seitenansicht und
Fig. 2 eine Draufsicht auf eine Trägerplatte mit eingelegten Rohren.

Bei der dargestellten Ausführungsform einer erfindungsgemäßen Klimaplatte 1 ist eine Trägerplatte 2 aus einem gut wärmedämmendem Material, wie z.B. geschäumtes Polystyrol, Kork, Holz, Faserplatten od. dgl., vorgesehen, die, wie aus der Fig, 2 zu ersehen ist, mit einem entlang ihres Umfanges umlaufenden hochgezogenen Rand 3 versehen ist.

In diesem Rand 3 sind Rillen 4 eingearbeitet, die zur Aufnahme von Leitungen oder Rohren 5 dienen, die von einem Heiz- oder Kühlmedium durchströmbar sind.

Weiters ragen von der Trägerplatte 2 noch Erhebungen 6 und 7 auf, wobei zwischen den Erhebungen 6 und 7 bogenförmig verlaufende Rillen 8 verbleiben, in denen Rohre 5 eingelegt werden können. Damit können die Rohre 5 in verschiedener Weise in die Trägerplatte 2 eingelegt und gehalten werden.

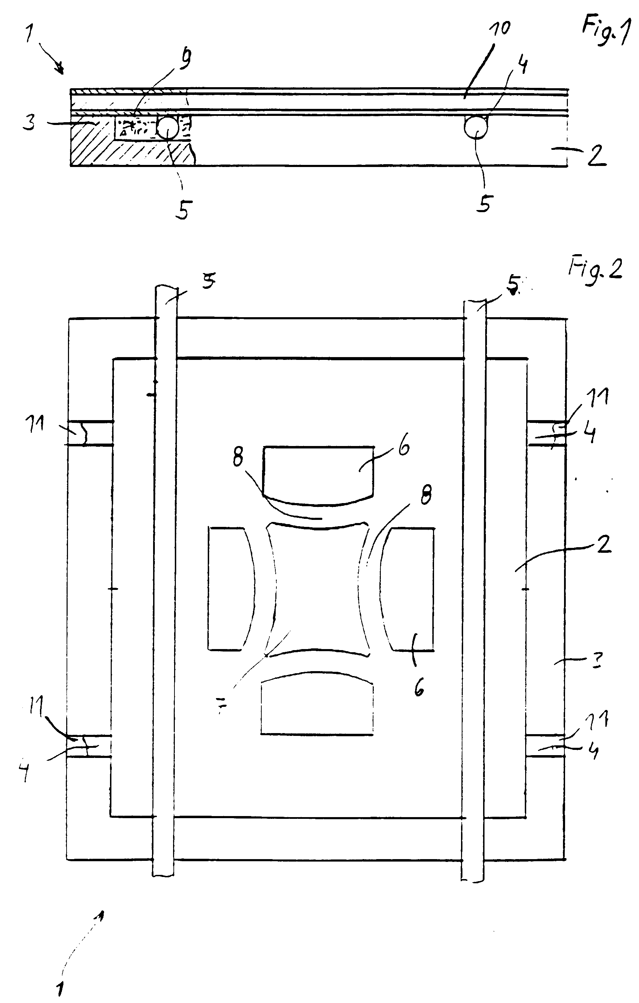

Wie aus der Fig. 1 zu ersehen ist, ist der Raum zwischen den Rohren und den Erhebungen 6, 7, bzw. dem Rand 3 mit einer Schicht 9 aus Partikeln aus einem gut wärmeleitenden Material, wie. z.B. Metallgranulat oder Metallspänen, die vorzugsweise gebrochen sind, Sand, insbesondere Quarzsand, Kohlenstaub od. dgl., ausgefüllt. Dabei ist die Trägerplatte 2 bis auf die Höhe der Erhebungen 6, 7 und des Randes 3 mit dieser Schicht 9 ausgefüllt.

Vor der Einbringung dieser Schicht 9 können die Partikel mit einer geringen Menge eines Klebers oder eines Bindemittels benetzt werden.

Eine Abdeckplatte 10 ist an den Oberseiten des Randes 3 und der Erhebungung 6, 7 mittels eines Klebers befestigt und liegt dabei auch auf der Schicht 9 auf. Die Abdeckplatte 10 selbst ist beim dargestellten Ausführungsbeispiel durch eine Gipskartonplatte gebildet.

Da die Schichte 9 im wesentlichen trocken eingebracht wird und die Befestigung der Abdeckpiatte 10 mit einem im wesentlichen wasserfreien Kleber an der Trägerplatte 2 befestigt wird, kommt es zu keiner Durchfeuchtung der Abdeckplatte, soda$ diese ihre volle Festigkeit behält.

Die an den äußeren Rändern offenen Rillen 4 sind mit einer Dichtmasse 11 abgeschlossen, sodaß keine Partikel aus der Schicht 9 herausrieseln können, auch wenn die Schicht 9 ohne Kleber oder Bindemittel eingebracht wurde.

## Patentansprüche

1. Klimaplatte, insbesondere für Wohn- und Büroräume, mit auf einer Trägerplatte aus einem schlecht wärmeleitenden Material, wie z.B. Polystyrolschaum, angeordneten, von einem Kühl- und/oder Heizmedium durchströmbaren Leitungen oder Rohren (5), zwischen denen eine Füllschicht (9) angeordnet ist, wobei eine an der Füllschicht (9) im wesentlichen flächig anliegende Abdeckung (10) gegen den zu klimatisierenden Raum zu vorgesehen ist, **dadurch gekennzeichnet,** daß die die Leitungen oder Rohre (5) enthaltende Füllschicht (9) aus Partikeln aus einem gut wärmeleitenden Material, wie z.B. Metallgranulat oder -späne oder Keramik, Sand, insbesondere Quarzsand oder Kohlenstaub, gebildet ist.

2. Klimaplatte nach Anspruch 1, **dadurch gekennzeichnet,** daß die Trägerplatte (2) Erhebungen (6, 7) aufweist, in denen Rillen (8) zur Aufnahme der Leitungen oder Rohre (5) angeordnet sind und daß als Abdeckung eine Gipskartonplatte mit den Oberseiten der Erhebungen (6, 7) verklebt ist, wobei sich ein erhöhter Rand (3) entlang des Umfanges der Trägerplatte (2) erstreckt und allfällig in diesen eingearbeitete Rillen (4) mit einer Dichtmasse (11) abgeschlossen sind.

3. Verfahren zur Herstellung einer Klimaplatte nach einem der Ansprüche 1 oder 2, bei dem nach dem Aufbringen der Leitungen oder Rohre (5) auf eine vorgefertigte Trägerplatte (2) die Zwischenräume zwischen den Leitungen oder Rohren (5) mit einer gut wärmeleitenden Füllmasse ausgefüllt und anschließend eine Abdeckplatte (10) flächig auf die Füllmasse aufgelegt und befestigt wird, **dadurch gekennzeichnet,** daß als Füllmasse im wesentlichen Partikel eines gut wärmeleitenden Materials verwendet werden, die gegebenenfalls mit einem Kleber oder Bindemittel benetzt wurden und die Abdeckplatte (10) mit der Trägerplatte (2) mindestens an ihrem Umfang gebunden wird.

## Claims

1. Temperature regulating panel, particularly for dwelling rooms and office rooms, with ducts or pipes (5), through which a cooling and/or heating medium may flow, being arranged on a supporting plate (2) made of a material with low heat conductivity, such as polystyrene foam, a filling layer (9) being arranged between said ducts or pipes (5), whereby a cover (10) toward the room whose temperature is to be regulated is provided, said cover (10) lying substantially flat against said filling layer (9), **characterized in that** the filling layer (9) containing the ducts or pipes (5) is made up of particles of a material with a high heat conductivity, such as metal granulate or filing, ceramics, sand, particularly quartz sand, or coal dust.

2. Temperature regulating panel according to claim 1, **characterized in that** the supporting plate (2) comprises elevations (6, 7) in which grooves (8) are provided for containing the ducts or pipes (5), and that a plasterboard is cemented to the upper sides of said elevations (6, 7) as a cover, whereby an elevated rim (3) extends along the circumference of said supporting plate (2) and any grooves (4) possibly machined into said rim (3) are closed with sealant (11).

3. Method for the production of a Temperature regulating panel according to one of the claims 1 or 2, in which method the spaces between the ducts or pipes (5) are filled with a filling mass featuring a high heat conductivity after placing the ducts and pipes (5) onto a prefabricated supporting plate (2), and afterwards a cover plate (10) is placed flat onto the filling mass and then fastened, **characterized in that** particles of a material with a high heat conductivity are substantially employed as a filling mass, said particles having possibly been sprayed with a binder or glue, and that the cover plate (10) is bonded with the supporting plate (2) at least along its circumference.

## Revendications

1. Plaque de climatisation, notamment pour intérieurs résidentiels et intérieurs de bureau, comprenant des conduits ou tubes (5) pouvant être traversés par un agent de refroidissement et/ou de chauffage, entre lesquels se trouve une couche de remplissage (9) et qui sont agencés sur une plaque de support (2) fabriquée à base d'un matériau de faible conductivité thermique, tel que la mousse de polystyrène, avec une plaque de recouvrement (10) appliquée essentiellement de façon plane contre la couche de remplissage (9) et contre l'espace intérieur à climatiser, caractérisée en ce que la couche de remplissage (9) renfermant les conduits ou tubes (5) est formée de particules d'un matériau de bonne conductivité thermique, tels que des granulés ou copeaux métalliques ou de céramique, de sable, en particulier de sable silicieux ou de la poussière de charbon.

2. Plaque de climatisation selon revendication 1, caractérisée en ce que la plaque de support (2) comporte des élévations (6,7) dans lesquelles sont agencées des rainures (8) destinées à recevoir les conduits ou tubes (5) et qu'une plaque de plâtre prévue comme recouvrement est collée sur les côtés supérieurs des élévations (6,7), avec un bord surélevé (3) s'étendant le long de la circonférence de la plaque de support (2) et pourvu éventuellement de rainures (4) qui sont scellées par une masse d'étanchéité (11).

3. Procédé pour la fabrication d'une plaque de climatisation selon l'une des revendications 1 ou 2, selon lequel des conduits et tubes (5) sont appliqués sur une plaque de support préfabriquée (2) formant ainsi des espaces intermédiaires entre les conduits et tubes (5) qui sont remplis d'une masse de remplissage de bonne conductivité thermique et selon lequel une plaque de recouvrement (10) est apposée et fixée de façon plane sur cette masse de remplissage, caractérisé en ce que la masse de remplissage utilisée se compose essentiellement de particules d'un matériau de bonne conductivité thermique, le cas échéant, arrosés d'un agent collant ou liant et que la plaque de recouvrement (10) est liée à la plaque de support (2) au moins sur toute sa circonférence.
